Europäisches Patentamt

European Patent Office

Office européen des brevets

(11) Numéro de publication : **0 394 137 B1**

## (12) FASCICULE DE BREVET EUROPEEN

(45) Date de publication du fascicule du brevet :
22.06.94 Bulletin 94/25

(51) Int. Cl.⁵ : **G03H 1/06**

(21) Numéro de dépôt : **90401073.3**

(22) Date de dépôt : **20.04.90**

(54) **Dispositif holographique perfectionné en lumière incohérente.**

(30) Priorité : **21.04.89 FR 8905344**

(43) Date de publication de la demande :
**24.10.90 Bulletin 90/43**

(45) Mention de la délivrance du brevet :
**22.06.94 Bulletin 94/25**

(84) Etats contractants désignés :
**DE GB**

(56) Documents cités :
**US-A- 3 558 207
OPTICS COMMUNICATIONS, vol. 65, no. 4, 15
février 1988, pages 243-249, Elsevier Science
Publishers B.V., Amsterdam, NL; G.Y. SIRAT
et al.: "Conoscopic holograms"
JOURNAL OF THE OPTICAL SOCIETY OF
AMERICA, vol. 55, no. 11, novembre 1965,
pages 1555,1556; A.W. LOHMANN:
"Wavefront reconstruction for incoherent
objects"**

(56) Documents cités :
**JOURNAL OF THE OPTICAL SOCIETY OF
AMERICA, vol. 56, no. 10, octobre 1966, pages
1397,1398; H.R. WORTHINGTON: "Production
of holograms with incoherent illumination"**

(73) Titulaire : **FRANCE TELECOM
6, Place d'Alleray
F-75015 Paris (FR)**

(72) Inventeur : **Dufresne, Eric
212 rue de Tolbiac
F-75013 Paris (FR)**
Inventeur : **Chavel, Pierre
6 avenue de Rocroi
F-91380 Chilly Mazarin (FR)**
Inventeur : **Sirat, Gabriel
5 rue Leredde
F-75013 Paris (FR)**

(74) Mandataire : **Martin, Jean-Jacques et al
Cabinet REGIMBEAU
26, Avenue Kléber
F-75116 Paris (FR)**

## Description

La présente invention concerne le domaine de l'holographie.

Elle concerne plus précisément le domaine de l'holographie obtenue en lumière monochromatique incohérente, et dénommée généralement "holographie conoscopique" par les spécialistes.

Un dispositif permettant d'obtenir une holographie conoscopique en lumière incohérente est décrit dans le document US-A-4 602 844. Le dispositif décrit dans ce document comprend comme illustré schématiquement sur la figure 1 annexée, un cristal uniaxial biréfringent inséré entre deux polariseurs circulaires et un élément photosensible formant support d'enregistrement.

Selon le document US-A-4 602 844 l'axe du cristal est parallèle à l'axe géométrique du système, soit perpendiculaire au support d'enregistrement.

Ce cristal décompose un rayon incident en, d'une part, un rayon ordinaire, affecté d'un indice de réfraction $n_o$, d'autre part, un rayon extraordinaire, affecté d'un indice de réfraction variable en fonction de l'angle d'incidence $\theta$, soit $n_e(\theta)$ cet indice de réfraction variable.

Ces deux rayons se propagent à des vitesses différentes à l'intérieur du cristal. De ce fait, ils en sortent déphasés. L'holographie conoscopique se base sur le fait que ce déphasage est fonction de l'angle d'incidence $\theta$. Les deux rayons interfèrent sur le support d'enregistrement (film photographique, CCD...) après avoir traversé le polarisateur de sortie, de sorte que l'intensité du rayon résultant est fonction également de l'angle $\theta$. Autrement dit, contrairement à l'holographie classique, chaque rayon incident produit son propre rayon de référence. L'ensemble des rayons situés sur un cône d'axe parallèle à l'axe optique du cristal et d'angle ouverture $\theta$ donnera la même intensité sur le plan d'observation.

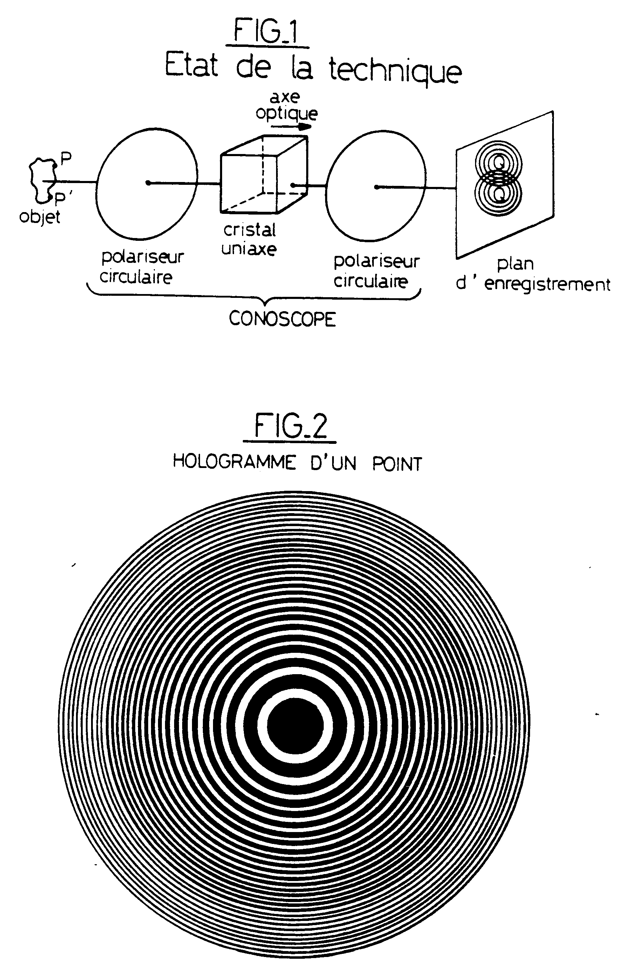

L'hologramme conoscopique d'un point obtenu à l'aide du dispositif précité correspond, comme illustré sur la figure 2 annexée à un réseau zoné, dont la transmittance varie sinusoïdalement en fonction du carré de la distance au centre du réseau, c'est-à-dire à une série de franges annulaires et concentriques d'interférence.

L'hologramme conoscopique d'un objet est la superposition des hologrammes de chacun des points composant l'objet. Les figures 3b et 3c du document US-A-4 602 844 précité montrent respectivement l'hologramme de 2 et 3 points d'un objet plan.

L'hologramme résultant contient toute l'information utile, de sorte qu'il est possible de reconstruire en trois dimensions l'objet initial.

Le système conoscopique réalise une transformation linéaire entre l'objet et son hologramme.

L'intensité en un point Q de l'hologramme élémentaire du point P sera :

$$(1) \qquad I_p(Q) = I(P)(1 + \cos\alpha(P)r^2)$$

$\alpha(P)$, appelé paramètre de Fresnel, dépend des caractéristiques optico-géométriques du cristal, de la longueur d'onde $\lambda$ de la lumière et de la distance longitudinale $z(P)$ à laquelle se trouve le point P par rapport au plan d'enregistrement.

La réponse percussionnelle du système, qui caractérise la transformation linéaire, s'écrit :

$$(2) \qquad T(x', y') = 1 + \cos(\alpha r^2)$$

où $r^2 = x'^2 + y'^2$, on peut donner une expression approchée de $\alpha$ qui s'écrit :

$$(3) \qquad \alpha = 2\pi L \frac{\Delta n}{\lambda n_0^2 Z_c^2},$$

avec

$\lambda$: longueur d'onde de la source,

L: longueur d'onde du cristal selon l'axe optique,

$n_o$: indice ordinaire du cristal,

$\Delta n$: valeur absolue de la différence entre les indices ordinaire et extraordinaire,

x, y, z: coordonnées dans le volume objet,

x', y': coordonnées dans le plan de l'hologramme,

Zc: représente la coordonnée longitudinale corrigée de P et vaut :

$$(4) \qquad Z_c = Z(x,y) - L + \frac{L}{n_0},$$

où $Z(x,y)$ est la distance entre le plan holographique et le point objet considéré, situé à la position latérale $(x,y)$.

Le paramètre de Fresnel s'écrit encore :

$$(5) \qquad \alpha = \frac{\pi}{\lambda_{eq}(Z_c)Z_c},$$

définissant ainsi une longueur d'onde équivalente $\lambda_{eq}$ :

$$(6) \qquad \lambda_{eq} = \lambda n_0^2 \frac{Z_c}{\Delta n 2L},$$

ou encore

$$(7) \qquad \alpha = \frac{\pi}{\lambda f_c},$$

définissant ainsi la distance focale $f_c$ de la lentille de Fresnel :

$$(8) \qquad f_c = n_0^2 \frac{Z_c^2}{\Delta n\, 2L}.$$

Dans le cas où l'objet considéré est plan ($\alpha$ = constante) la longueur d'onde équivalente et la focale $f_c$ sont des constantes du système.

La relation (5) montre alors que l'hologramme conoscopique d'un point enregistré à la longueur d'onde $\lambda$ est similaire à l'hologramme de ce même point enregistré en lumière cohérente (holographie de Gabor) à la longueur d'onde équivalente $\lambda_{eq}$ ; notons que l'hologramme conoscopique mesure des intensités et non des amplitudes.

Les distances $Z_c$ et $L$ étant du même ordre de grandeur et $\Delta$ n étant de l'ordre de O,1, la longueur d'onde $\lambda_{eq}$ est supérieure à la longueur d'onde réelle d'enregistrement $\lambda$ ; typiquement $\lambda_{eq}$ = 3 à 100µm.

Il s'en suit que la résolution latérale dans l'hologramme (proportionnelle à la longueur d'onde $\lambda$ ) est plus faible en holographie conoscopique qu'en holographie classique ; elle est de l'ordre de quelques dizaines de micromètres.

Comme indiqué précédemment, l'hologramme enregistré avec un dispositif conoscopique contient toute l'information utile.

Par exemple pour l'hologramme d'un point correspondant à un réseau zoné :

- le centre de la zone et le point objet sont sur la même droite, parallèle à l'axe optique, et si le point objet est translaté, transversalement ou latéralement, l'hologramme se translate indentiquement dans le plan holographique. Les coordonnées du centre $C(x_0, y_0)$ de la zone de Fresnel sont donc égales, aux deux premières coordonnées du point $P(x_0, y_0, z_0)$ holographié.
- l'intensité de l'hologramme donne l'énergie lumineuse dans le cône d'ouverture de lumière.
- l'espacement des franges fournit la distance de l'objet au plan d'observation, indépendamment de la position du dispositif conoscopique. On peut en effet écrire :

$$(9) \qquad Z_c = R^2/F\lambda_{eq}$$

et

$$(10) \qquad Z(x,y) = Z_c + L - L/n_0 = R^2/F\lambda_{eq} + L - L/n_0$$

avec R le rayon de la zone de Fresnel et F le nombre de franges claires et sombres sur ce rayon.

Les avantages du procédé holographique qui vient d'être décrit sont entre autres les suivants :

- l'absence de contrainte supplémentaire due à la cohérence spatiale de la lumière utilisée permettant d'imager la scène par une optique standard traditionnelle,
- sa stabilité inhérente (chaque hologramme élémentaire suivra le point auquel il est associé) ramenant les conditions de prise à celle de la photographie et autorisant le fonctionnement en milieu industriel pour des objets mobiles,
- une résolution requise à l'enregistrement adaptable aux capteurs CCD permettant la numérisation en temps réel ainsi que la sommation de plusieurs images pour améliorer le rapport signal sur bruit.

L'enregistrement étant linéaire, si l'on a à faire à un objet dont les points diffusants de la lumière se trouvent sur une surface tridimensionnelle S, l'intensité en un point Q de l'hologramme sera la superposition incohérente de tous les hologrammes élémentaires des points P composant l'objet et s'écrira :

$$(11) \qquad H(Q) = \int_S I_P(Q)\, dP$$

Dans le cas bidimensionnel, cette intégrale se ramène à une simple convolution et dans le cas tridimensionnel, à une série de convolutions.

La reconstruction de tels hologrammes peut se faire soit optiquement par codage de l'information numérique sur plaque photolithographique et relecture visuelle par faisceau laser, soit numériquement par application d'algorithmes adéquats de déconvolution permettant l'obtention du fichier $z(x,y)$.

Cependant malgré les grands espoirs fondés sur l'holographie conoscopique précitée, celle-ci n'a pas connu jusqu'ici de développements industriels.

Cela semble du au fait que l'hologramme ainsi obtenu s'avère en fait assez difficile à exploiter.

En réalité, l'hologramme conoscopique obtenu avec les moyens décrits dans le document US-A 4 602 844 englobe deux informations parasites correspondant respectivement au fond continu cohérent (représentant la lumière non diffractée) et à une image conjuguée, qui brouillent l'information de base suffisante pour reconstruire l'objet.

Ces deux informations parasites superposées à l'information utile lors de l'enregistrement d'un hologramme conoscopique peuvent être mises en évidence en éclairant l'hologramme conoscopique enregistré sur un film photosensible par une onde plane monochromatique. On observe alors en effet trois faisceaux diffractés : le premier représente l'onde directement transmise par le film et correspond au fond continu ; le second est une onde sphérique divergeant d'un objet virtuel qui est la réplique de l'objet original ; le troisième est une onde sphérique convergeant vers une image réelle conjuguée de l'objet située symétriquement à l'image virtuelle par rapport au plan de l'hologramme.

Les deux informations parasites précitées (fond continu et image conjuguée) peuvent également être mises en évidence par l'approche plus théorique suivante.

Dans le cas d'objets plans, la transformation linéaire entre l'intensité $I(x,y)$ de l'objet et l'intensité $H(x',y')$ dans l'hologramme est une convolution :

$$(12) \qquad H(x',y') = I(x,y) * T(x,y).$$

Après développement de l'équation de convolution (12), l'hologramme apparaît comme une transformée de Fresnel :

$$(13) \qquad H(x'y') = I_0 + I(x,y) * \cos(\alpha\, r^2)$$

ou encore

$$(14) \qquad H(x', y') = I_0 + 1/2 I(x, y) * e^{j\alpha r^2} + 1/2 I(x, y) * e^{-j\alpha r^2}$$

où

$I_0$ représente l'intensité du fond continu qui pénètre directement à travers le système et $1/2 I(x,y)*e^{-j\alpha r^2}$ représente l'image conjuguée.

Comme décrit dans le document Optics Communications Vol 65, No4 Feb. 15, 88, pages 243-249, il a été envisagé, pour s'affranchir du fond continu et de l'image conjuguée, d'incliner l'axe optique du cristal biréfringent par rapport à l'axe optique du système. Cependant, telle qu'elle a été présentée, dans ce document, cette configuration est incapable de restituer l'objet dans sa totalité et s'accompagne d'une détérioration de toute une partie du spectre. Cette configuration ayant donné des résultats très médiocres a été rapidement abandonnée.

Une autre solution pour éliminer l'image conjuguée et le fond continu est décrite dans la demande de brevet français n. 88 17225 déposée le 27 décembre 1988. Son principe repose sur la combinaison linéaire de divers hologrammes.

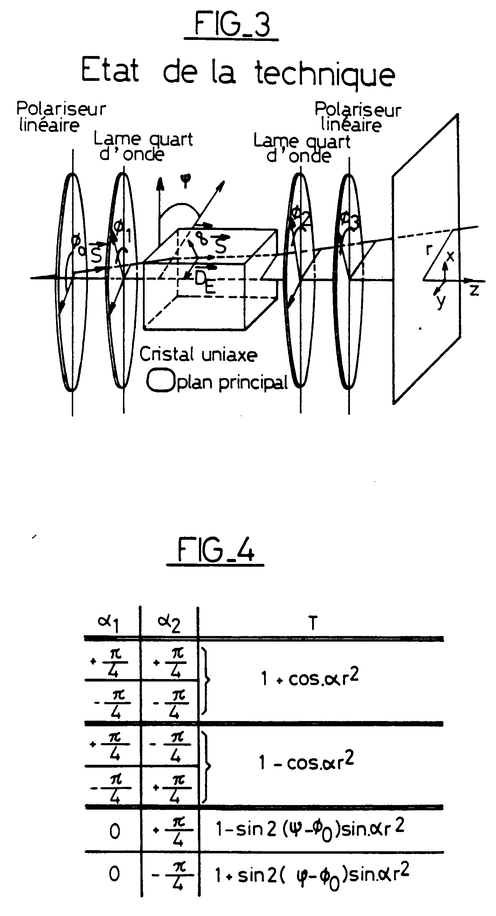

Dans le montage de base décrit dans le document US-A-4 602 844 et rappelé précédemment, les polariseurs circulaires d'entrée et de sortie sont constitués d'un polariseur rectiligne et d'une lame quart d'onde solidaires. L'invention décrite dans la demande de brevet FR-88 17225 propose de désolidariser ces deux lames, pour permettre d'imposer n'importe quelle polarisation à l'onde transmise. Le schéma du nouvel élément conoscopique obtenu est représenté sur la figure 3 annexée. Les angles $\phi_0$, $\phi_1$, $\phi_2$, et $\phi_3$ repèrent la position des axes principaux de polarisation des diverses lames. Si l'on appelle T la réponse percusionnelle optique, l'intensité en un point Q de l'hologramme d'un point P s'écrira :

$$(15) \qquad I_p(Q) = I(P)T(P,Q).$$

Le tableau de la figure 4 annexée montre les diverses expressions de la fonction T suivant les valeurs de $\alpha_1 = \phi_0 - \phi_1$ et de $\alpha_2 = \phi_2 - \phi_3$. L'angle $\psi$ et la distance r représentent les coordonnées polaires du point Q dans le repère lié au centre du réseau zoné (projection orthogonale de P sur le plan d'enregistrement). Le paramètre (P) se définit de la même manière que dans le montage de base.

On voit qu'il est possible, à partir de combinaisons linéaires simples de fonctions de transfert du tableau précédent, d'obtenir les deux réponses percussionnelles suivantes :

$$(16) \qquad T_c(P,Q) = \cos\alpha(P)r^2$$
$$(17) \qquad T\phi_0(P,Q) = \sin 2(\psi - \phi_0)\sin\alpha(P)r^2$$

soit encore en prenant respectivement $\phi_0 = 0$ et $\phi_0 = \dfrac{\pi}{4}$

$$(18) \qquad T_c(P,Q) = \cos\alpha(P)r^2$$

$$(19) \qquad T_0(P,Q) = \sin2\,\psi\sin\alpha(P)r^2$$

$$(20) \qquad T\frac{\pi}{4}(P,Q) = \cos2\,\psi\sin\alpha(P)r^2$$

A l'aide de combinaisons linéaires de ces trois fonctions dans le plan de Fourier, on est capable d'obtenir avec exactitude la réponse percussionnelle complexe :

$$(21) \qquad T(P, Q) = \exp j\alpha\,(P)r^2$$

pour un point ou un objet plan.

Cependant, pour une surface tridimensionnelle cette expression n'est plus valable et ne peut être considérée comme valide que pour les hautes fréquences de l'hologramme. Il existe des méthodes permettant de restituer les basses fréquences utilisant en particulier l'image bidimensionnelle de la scène qui sera donnée par une autre caméra. Celles-ci sont lourdes à mettre en oeuvre et nécessitent la connaissance d'un facteur de normalisation entre l'image et l'hologramme qui est délicat à évaluer.

Par conséquent, ce type d'holographie n'est opérationnel que pour des applications où l'on ne s'intéresse pas aux fréquences basses, notamment dans les systèmes de repérage de points (projection de grille de points) ou les télémètres.

La présente invention a maintenant pour but de proposer de nouveaux moyens permettant de donner l'hologramme complexe pour une surface tridimensionnelle quelconque simplement par filtrage dans le plan de Fourier.

Comme on le verra par la suite, la présente invention permet d'éliminer l'image conjuguée sans correction dépendante de la coordonnée longitudinale.

Le but précité est atteint, selon la présente invention, grâce à un dispositif holographique pour enregistrer, sur des moyens d'enregistrement, un hologramme d'un objet illuminé, ledit dispositif comprenant un système conoscopique inséré sur le trajet des rayons entre l'objet et les moyens d'enregistrement, ledit système comportant un cristal biréfringent inséré entre deux polariseurs, ledit dispositif étant caractérisé par un limiteur d'angle d'ouverture inséré sur ledit trajet des rayons, et par le fait que soit l'axe optique du cristal biréfringent coïncide avec l'axe joignant l'objet et les moyens d'enregistrement, et l'axe du limiteur d'angle d'ouverture est hors de cet axe ; soit l'axe du limiteur d'angle d'ouverture coïncide avec l'axe joignant l'objet et les moyens d'enregistrement et l'axe optique du cristal biréfringent est incliné par rapport à cet axe.

L'axe joignant l'objet et les moyens d'enregistrement sera appelé "axe optique du dispositif", par la suite.

Selon un premier mode de réalisation conforme à la présente invention, le limiteur d'angle d'ouverture comprend une lentille et un diaphragme dont la bordure affleure l'axe de la lentille, tandis que le cristal biréfringent a son axe optique parallèle à l'axe optique du dispositif.

Selon un deuxième mode de réalisation conforme à la présente invention, le limiteur d'angle d'ouverture comprend une lentille et un diaphragme centrés sur l'axe optique du dispositif, tandis que le cristal a son axe incliné par rapport à l'axe optique du dispositif.

Selon une troisième mode de réalisation, le limiteur d'angle d'ouverture est un filtre interférentiel et le cristal biréfringent a son axe incliné par rapport à l'axe optique du dispositif.

Selon un quatrième mode de réalisation conforme à la présente invention, le limiteur d'angle d'ouverture est formé d'un système à double prisme, tandis que le cristal biréfringent a son axe incliné par rapport à l'axe optique du dispositif.

Selon un cinquième mode de réalisation conforme à la présente invention, le limiteur d'angle d'ouverture est formé d'une galette de fibres.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 déjà décrite illustre schématiquement la structure générale du dispositif évoqué dans le document US-A-4 602 844,
- la figure 2 déjà décrite représente l'hologramme d'un point,
- la figure 3 déjà décrite représente schématiquement la structure du dispositif enseigné dans la demande de brevet FR-88 17225 et la figure 4 représente les diverses fonctions de transfert associées,
- la figure 5 représente sous forme de blocs fonctionnels, la partie optique d'un dispositif conoscopique conforme à la présente invention,
- la figure 6a représente l'hologramme élémentaire d'un point obtenu avec le dispositif conforme à la présente invention,
- les figures 6b et 6c représentent respectivement la partie réelle et la partie imaginaire de la transformée de Fourier de l'hologramme élémentaire,
- la figure 7 représente schématiquement le cas d'un limiteur d'angle d'ouverture à diaphragme hors de l'axe avec cristal sur l'axe,
- les figures 8 et 9 représentent deux variantes d'un limiteur d'angle d'ouverture à diaphragme sur l'axe avec cristal hors de l'axe,
- la figure 10 représente un système à double optique,
- la figure 11 représente la bande passante d'un filtre interférentiel,
- la figure 12 représente schématiquement une variante de limiteur d'angle d'ouverture à prisme,
- la figure 13 représente une variante de réalisation conforme à la présente invention permettant d'obtenir une image bidimensionnelle de l'objet en sus de l'hologramme, et
- la figure 14 représente un schéma général d'un dispositif conforme à la présente invention.

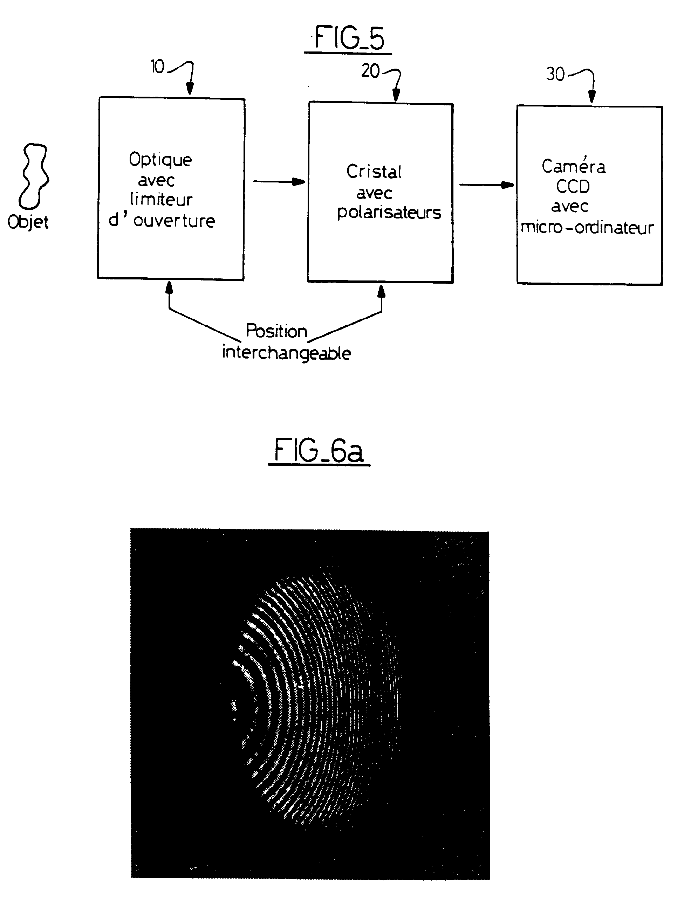

Comme illustré sur la figure 5 annexée, le dispositif conforme à la présente invention comprend essentiellement trois modules : 1) une optique avec limiteur d'angle d'ouverture 10, 2) un système conoscopique 20 comprenant un cristal biréfringent placé entre deux polariseurs et 3) des moyens d'enregistrement 30 formés par exemple d'une caméra type CCD associée à un microordinateur.

Bien entendu l'optique avec limiteur d'angle d'ouverture 10 et le système conoscopique 20 doivent être placés entre l'objet et les moyens d'enregistrement 30.

Par contre, l'optique avec limiteur d'angle d'ouverture 10 et le système conoscopique 20 peuvent être interchangés, c'est-à-dire que le limiteur d'angle d'ouverture 10 pourra être placé avant ou après le cristal.

Chacun des polariseurs d'entrée et de sortie est formé d'un polariseur rectiligne et d'une lame quart d'onde associée, ou de moyens fonctionnellement équivalents.

L'une des quatre lames constituant les deux polariseurs circulaires doit être libre en rotation de façon à éliminer par soustraction numérique d'hologrammes le terme représentant la lumière non diffractée (fond continu). Cette disposition sera précisée par la suite.

La conséquence physique de cette disposition est la production pour chaque point de l'objet d'un réseau zoné dont le centre A se trouve sur la bordure limitant la surface de l'hologramme élémentaire comme l'indique la figure 6a.

Supposons que cette bordure limitative de chaque hologramme soit un cercle $\phi$ de centre C et de rayon R (cette bordure pourrait avoir n'importe quel dessin, à priori, du moment que le centre A du réseau zoné n'appartienne pas à l'hologramme). L'intensité en un point Q de l'hologramme élémentaire associé à un point P sera, après soustraction du fond continu :

$$(22) \qquad I_p(Q) \ = \ \phi_{(C,R)}(Q)\cos\alpha(P)r^2$$

où r est la coordonnée polaire de Q dans le repère lié à A.

$\phi_{(C,R)}(Q)$ vaut 1 si Q appartient à $\phi$ et 0 sinon.

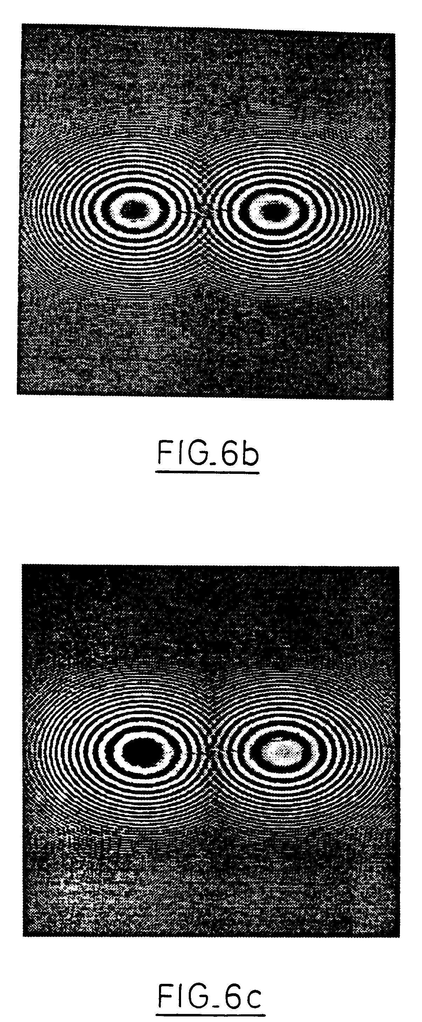

La partie réelle et la partie imaginaire de la transformée de Fourier de cet hologramme élémentaire sont représentées respectivement sur les figures 6b et 6c annexées.

La réponse percusionnelle n'étant plus symétrique, sa transformée de Fourier n'est plus réelle et est une exponentielle complexe.

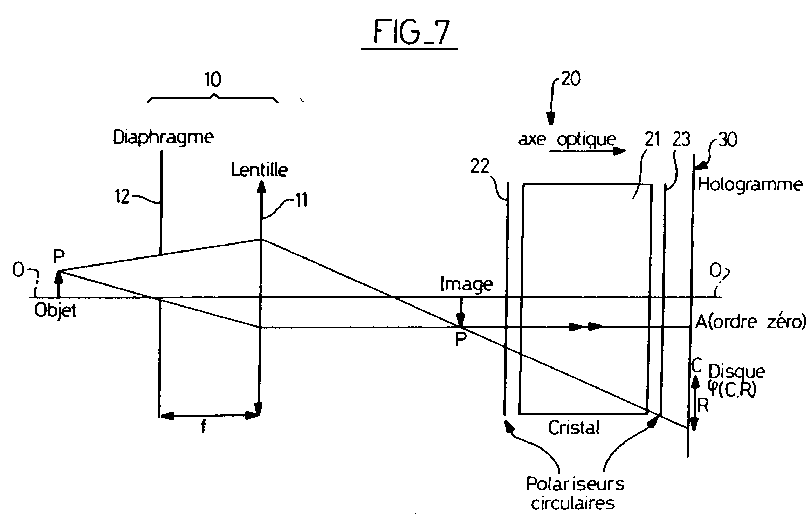

On a représenté schématiquement sur la figure 7 la structure d'un dispositif conoscopique conforme à la présente invention comprenant un limiteur d'angle d'ouverture hors de l'axe et un cristal sur l'axe.

Sur la figure 7, l'axe optique du système est référencé O-O.

On retrouve sur la figure 7 le système conoscopique 20 comprenant un cristal biréfringent 21 placé entre deux polariseurs circulaires 22, 23. Le cristal 21 a son axe parallèle à l'axe optique O-O du système.

On retrouve également sur la figure 7 un support d'enregistrement 30, transversal à l'axe O-O, schématiquement représenté.

Selon la figure 7, le limiteur d'angle d'ouverture hors de l'axe 10 consiste en une lentille 11 et un diaphragme 12. La lentille 11 est centrée sur l'axe O-O. La bordure du diaphragme 12 affleure l'axe optique O-O de la lentille. Le diaphragme 12 est placé dans le plan focal objet de cette même lentille 11.

Si l'on reprend l'expression 22 on voit que dans ce cas le point A (centre du réseau zoné) coïncide avec la projection orthogonale du point P.

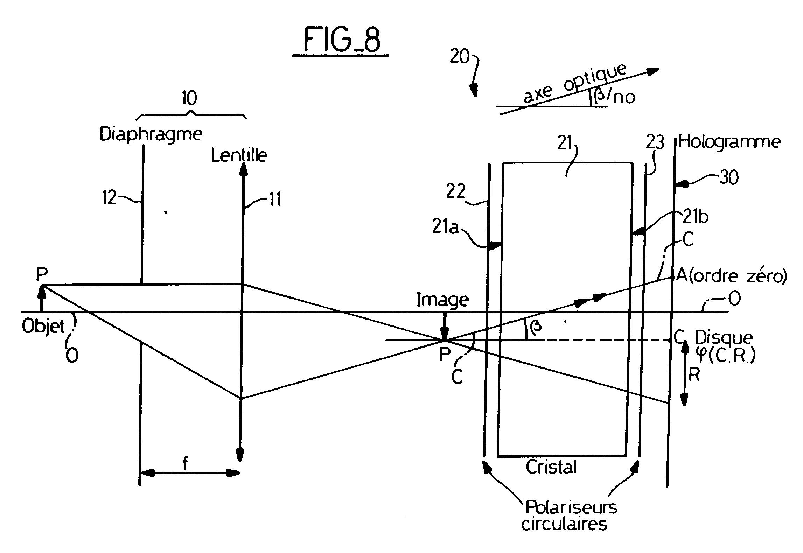

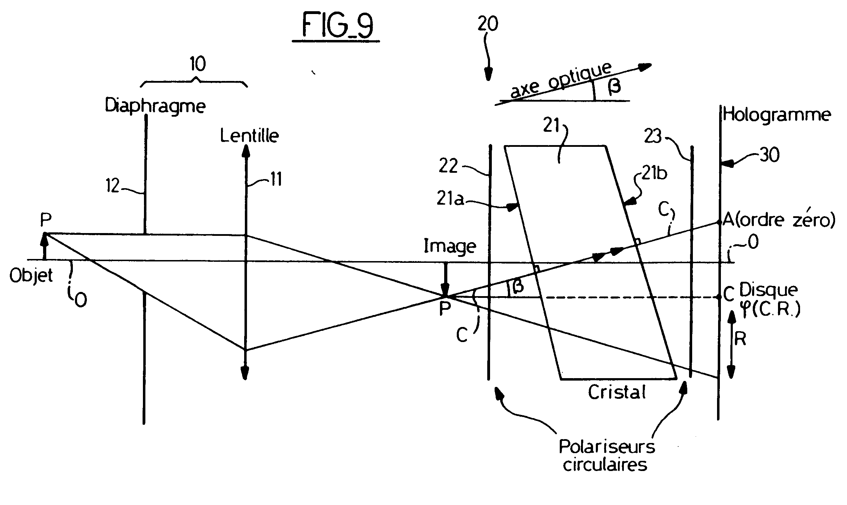

On a représenté schématiquement sur les figures 8 et 9 deux variantes de réalisation d'un dispositif conoscopique conforme à la présente invention, comprenant un limiteur d'angle d'ouverture sur l'axe et un cristal "hors de l'axe", c'est-à-dire ayant son axe incliné par rapport à l'axe optique O-O du système, d'un angle β.

On retrouve sur les figures 8 et 9 un système conoscopique 20 comprenant un cristal biréfringent 21 placé entre deux polariseurs circulaires 22, 23 et un support d'enregistrement 30.

L'axe optique du cristal 21 est référencé O-O sur les figures 8 et 9.

Le support d'enregistrement 30 est perpendiculaire à l'axe O-O.

Plus précisément, selon la figure 8, les faces d'entrée 21a et de sortie 21.b du cristal 21 sont perpendiculaires à l'axe optique O-O du système, alors qu'elles sont perpendiculaires à l'axe optique C-C du cristal selon la figure 9.

Selon les figures 8 et 9 le limiteur d'angle d'ouverture 10 est toujours formé d'un diaphragme 12 et d'une lentille 11. Ceux-ci sont centrés sur l'axe optique O-O du système. Le diaphragme 12 est placé au plan focal objet de la lentille 11.

Dans ce cas c'est le point c, centre du cercle délimitant l'hologramme élémentaire, qui coïncide avec la projection orthogonale de P sur le plan d'enregistrement 30.

Le demi-angle au sommet du cone d'ouverture attribué à chaque point et donné par le limiteur d'angle devra coïncider avec l'axe d'inclinaison du cristal.

Les systèmes qui ont été décrits en regard des figures 7, 8 et 9 permettent la limitation d'angle d'ouverture d'une manière spatialement invariante. C'est cette qualité qui est essentielle pour que la configuration hors de l'axe soit opérationnelle. Cependant dans les solutions précédentes, il faut que l'objet ait une extension spatiale inférieure à une valeur donnée pour que le limiteur d'angle d'ouverture puisse fonctionner correctement pour tous les points de l'objet. Si l'on appelle 0 le diamètre du diaphragme, D celui de la lentille et E l'extension spatiale de l'objet, on doit avoir la relation :

$$(23) \qquad E < \frac{dR}{f} - O(\frac{d}{f} + 1)$$

où f est la focale de la lentille et d la distance à laquelle se trouve l'objet par rapport au diaphragme. D'autre part, l'ouverture $\beta$ est indépendante de d :

$$(24) \qquad tg\beta = \frac{O}{2f}$$

Il suffit donc d'imager la scène de façon à réduire ses dimensions à l'aide d'une autre optique. Cependant si E tend vers zéro il faudra que l'image de la scène soit suffisamment éloignée du diaphragme à la distance d telle que :

$$(25) \qquad d > \frac{fO}{R - O}$$

D'autre part, si l'on utilise ce système à double optique il est aussi possible de réduire l'extension E de la scène à l'aide d'un deuxième diaphragme placé à l'endroit où vient se focaliser l'image de l'objet de façon à pouvoir sélectionner une zone dans l'objet.

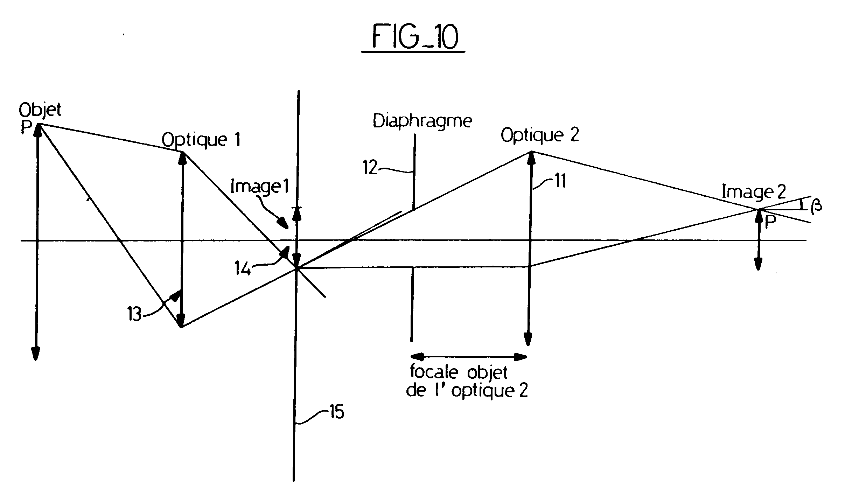

Un schéma de système à double optique est illustré sur la figure 10. La position du cristal n'est pas spécifiée sur cette figure car il peut se placer n'importe où devant l'objet holographié.

On aperçoit sur la figure 10, une première optique 13 donnant d'un objet une image réduite 14, puis le diaphragme 12 et la lentille 11 donnant l'image recherchée. Le diaphragme 12 est placé dans le plan focal objet de la lentille 11. On a représenté schématiquement sous la référence 15 un second diaphragme situé dans le plan de l'image 14 pour sélectionner une zone de celle-ci si nécessaire.

Si l'on considère le limiteur d'angle d'ouverture constitué d'un diaphragme 12 dans le plan focal objet d'une lentille 11, la forme du diaphragme 12 ainsi que sa transparence peuvent être choisis pour sélectionner certaines fréquences dans l'hologramme de façon à adapter ce filtre à un objet possédant une distribution spectrale (en termes de fréquences spatiales) donnée, ce qui peut être d'une utilité importante pour la reconnaissance des formes.

Pour donner un exemple simple, une forme de diaphragme carrée sera plus apte à restituer les fréquences verticales de l'objet holographié qu'une forme circulaire (on se place dans le cas où le décalage centre du réseau zoné est fait horizontalement). Si d'autre part, on veut restituer préférentiellement les fréquences hautes fréquences de l'objet, on pourra utiliser un diaphragme dont la transmittance sera 0,5 pour les basses fréquences de l'hologramme élémentaire et 1 pour les hautes fréquences, la loi de variation entre ces deux pouvant être choisie arbitrairement.

Le limiteur d'angle d'ouverture à lentille et diaphragme précité peut être remplacé par d'autres moyens fonctionnellement équivalents, indépendants de l'optique servant à imager la scène et coopérants avec un cristal hors de l'axe.

Selon une première variante, le limiteur d'angle d'ouverture à lentille et diaphragme peut être remplacé par un filtre interférentiel.

Considérons un filtre interférentiel de bande passante centré sur la longueur d'onde $\lambda_0$ mais éclairé par une onde inclinée de $\alpha$ par rapport à la normale, de longueur d'onde $\lambda_1$. Le filtre interférentiel sera centré sur la longueur d'onde $\lambda_\alpha$ telle que :

$$(26) \qquad \lambda_\alpha = \lambda_0 \sqrt{1 - \frac{sin^2\alpha}{N^{*2}}}$$

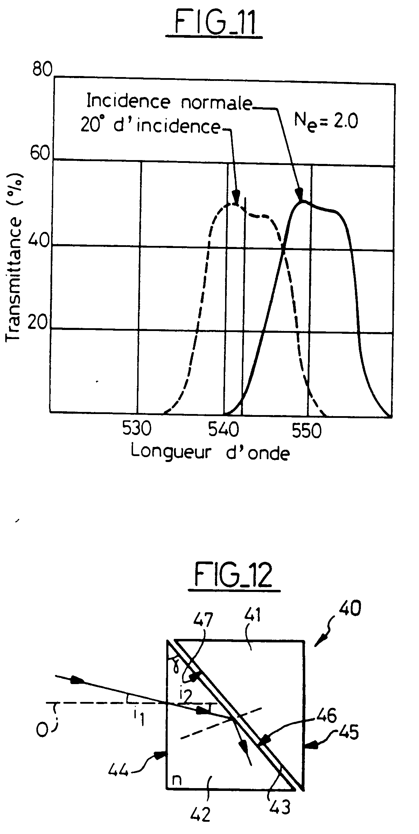

où N$*$ est l'indice effectif de réfraction du filtre. La figure 11 montre le décalage de la longueur d'onde de résonnance du filtre pour un angle $\alpha$ de 20°. On voit que quelque soit le signe de $\alpha, \lambda_\alpha$ sera toujours inférieure

à $\lambda_0$. Supposons que l'on veuille éliminer un angle $\alpha_0$ donné. On aura donc :

$$(27) \qquad \frac{\Delta\lambda}{2} + \lambda_{\alpha_0} = \lambda_1$$

avec

$$(28) \qquad \lambda_0 - \frac{\Delta\lambda}{2} < \lambda_1 < \lambda_0 + \frac{\Delta\lambda}{2}$$

Les équations (27) et (28) donnent la longueur d'onde $\lambda_1$ à laquelle il faut attaquer le filtre pour éliminer tous les angles au dessus de $\alpha_0$ pour $\Delta\lambda$ et $\lambda$ fixés.

Selon une seconde variante, le limiteur d'angle d'ouverture à lentille et diaphragme peut être remplacé par un système à double prisme.

Comme représenté sur la figure 12, ce système peut être formé d'un cube de verre 40 d'indice n séparé en deux parties identiques 41, 42, par une couche d'indice plus faible 43 (de l'air par exemple).

Sur la figure 12 on a référencé O-O l'axe optique du système et L un rayon lumineux incident faisant un angle $i_1$ par rapport à l'axe optique O-O.

L'axe O-O et le rayon L définissent un plan orthogonal aux faces d'entrée 44 et de sortie 45 du système 40.

Par ailleurs, le plan défini par l'axe O-O et le rayon L est également orthogonal aux faces internes en regard 46, 47, des prismes 41, 42, qui sont parallèles entre elles et délimitent ladite couche d'indice plus faible 43. Ces faces 46, 47, sont elles-mêmes inclinées d'un angle $\gamma$ par rapport aux faces d'entrée 44 et de sortie 45.

Considérons un rayon L faisant l'angle $i_1$ avec l'axe O-O. L'angle $\gamma$ de la couche 43 pour lequel il y aura réflexion totale pour $i_1 = \alpha_0$ petit, sera donné par la formule :

$$(29) \qquad \gamma = \text{Arcsin}\, \frac{1}{n} - \frac{\alpha_0}{n}$$

De préférence l'angle maximal $i_1$ éliminé par le système 40 coïncide avec l'angle d'inclinaison de l'axe du cristal 21.

Le système à double prisme 40 ne permet d'éliminer des angles supérieurs à une valeur donnée que dans une seule direction. Si l'on veut éliminer des angles dans les trois autres directions (signe opposé et dans des directions orthogonales), on devra ajouter trois autres éléments identiques positionnés convenablement. Ceci n'est cependant pas une condition nécessaire car la séparation de l'image réelle et conjuguée se fera d'une manière adéquate avec un seul élément. L'apport des 3 autres éléments éventuels se situe en fait au niveau du rapport signal sur bruit.

Selon une troisième variante, le limiteur d'angle d'ouverture à lentille et diaphragme peut être remplacé par un ensemble de galette de fibres.

Les galettes de fibres sont actuellement utilisées dans des caméras CCD comme des intensificateurs d'images. On peut les utiliser aussi comme limiteurs d'angle d'ouverture.

En effet, ces éléments sont constitués de fibres dont le coeur est très fin (de l'ordre de 4 à 6 microns de diamètre), enveloppés d'un verre intersticiel légèrement absorbant optiquement. La dégradation d'image est faible dans la mesure où le densité de fibres par cellule élémentaire de la plaquette CCD est de 25 à 30. La transmittance selon l'axe d'une telle galette est typiquement 80 % à 90 %. En fonction de l'indice de réfraction du coeur et de la gaine, chaque fibre aura une ouverture numérique donnée et éliminera donc tous les angles à partir d'une certaine valeur.

On a indiqué précédemment que la lumière non diffractée (fond continu) pouvait être éliminée par soustraction d'hologrammes.

Quelle que soit la configuration dans laquelle on se place, l'élimination du fond continu peut être obtenue par prise et soustraction de deux hologrammes. Le premier hologramme correspond au cas où les deux polariseurs d'entrée et de sortie 22 et 23 sont circulaires de même sens (droit ou gauche). Le deuxième hologramme correspond au cas où les polariseurs d'entrée et de sortie 22, 23, sont circulaires de sens opposé (si l'un est circulaire droit par exemple, l'autre devra être circulaire gauche).

Pour cela il suffit que l'une des quatre lames composant les polariseurs 22, 23, soit indépendante en rotation et de faire tourner cette lame de 90° pour passer d'un cas à l'autre.

De préférence, le système conforme à la présente invention est de plus muni de moyens permettant d'obtenir l'image bidimensionnelle de l'objet en même temps que l'hologramme.

Pour cela il suffit de remplacer le polariseur linéaire d'entrée par un prisme bipolarisant 22.1 de façon à aiguiller l'autre polarisation (correspondant à la moitié de la lumière qui est directement inutilisée si l'on se contente d'un simple polariseur linéaire) vers un second support d'enregistrement 50 (tel qu'une caméra). Ceci permet une meilleure interactivité et facilite l'exploitation de l'hologramme, notamment en traitement d'images. Dans ce cas, il est donc nécessaire de libérer en rotation l'une des trois lames restantes, pour obtenir les 2 hologrammes requis pour supprimer le fond continu.

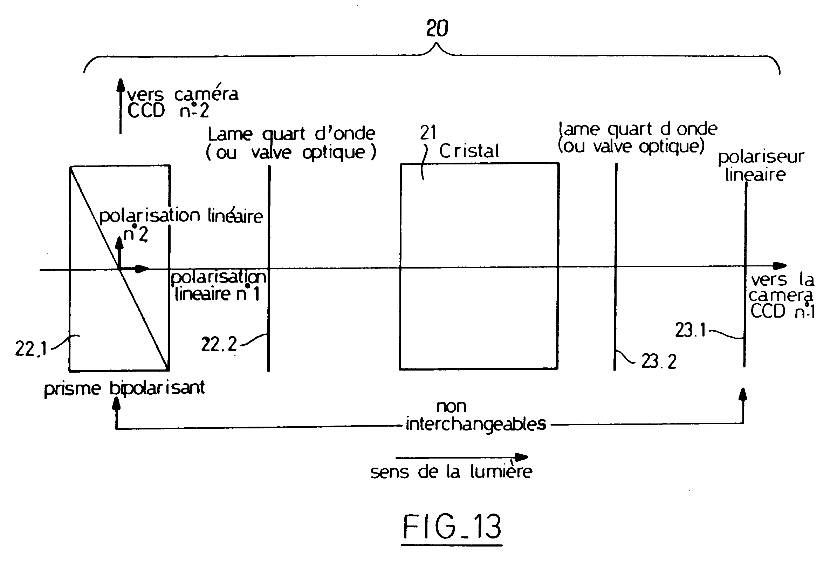

Le schéma de cette solution est montré sur la figure 13.

On retrouve sur la figure 13 un système conoscopique 20 comprenant un cristal 21, un polariseur circulaire d'entrée 22 et un polariseur circulaire de sortie 23.

Le polariseur circulaire d'entrée 22 est formé d'un prisme bipolarisant 22.1 et d'une lame quart d'onde ou valve optique équivalente 22.2.

Le polariseur circulaire de sortie 23 est quant à lui formé d'une lame quart d'onde ou valve optique équivalente 23.2 et d'un polariseur linéaire 23.1

On notera que le prisme bipolarisant 22.1 et le polariseur linéaire de sortie 23.1 ne sont pas interchangeables. Le prisme bipolarisant 22.1 doit être prévu en amont, en référence au sens de la lumière.

Il est à noter que tout élément permettant de faire tourner la polarisation de 90° est intercallable à l'intérieur de l'espace limité par les deux polariseurs linéaires 22.1, 23.1. En particulier on peut remplacer une des deux lames quart d'onde 22.2, 23.2 par une valve optique. En jouant sur la tension, on pourra facilement changer la polarisation circulaire droite en polarisation circulaire gauche et inversement.

Le dispositif conoscopique à ouverture limitée conforme à la présente invention permet d'éliminer facilement l'image conjuguée et d'obtenir la réponse percusionnelle complexe quelle que soit la position longitudinale du point : une fois que l'on a enregistré l'hologramme dans cette configuration, que ce soit celui d'un objet plan ou d'une surface tridimensionnelle, il suffit de ne conserver que la moitié du spectre pour obtenir l'hologramme complexe de l'objet.

Le traitement numérique qui en découle est donc très simple puisqu'il consiste en l'annulation de la moitié du spectre.

On va indiquer à titre exemple non limitatif un mode de réalisation particulier du dispositif conforme à la présente invention.

Selon ce mode de réalisation, le dispositif comprend une caméra CCD 30 dont la matrice photosensible possède 512 x 512 pixel de taille 15 x 15 microns et de surface totale 8 x 8 millimètres, un cristal 21 hors de l'axe à faces parallèles au support d'enregistrement 30 précédé d'une double optique sur l'axe permettant à la fois de régler l'extension spatiale de la scène à holographier par un premier diaphragme et de limiter l'angle d'ouverture par un deuxième diaphragme 12. L'extension spatiale de la scène et du réseau zoné ont été choisies comme étant la moitié de l'extension spatiale du support.

Le rayon du réseau zoné sera :

$$(30) \qquad R = \frac{Nd}{2}$$

où N = 512 est le nombre total de pixels dans une direction.

Le nombre de franges sombres et claires, sur une distance de 2R par rapport à l'ordre zéro du réseau zoné sera :

$$(31) \qquad F = \frac{4\alpha R^2}{\pi}$$

et la fréquence maximale sera :

$$(32) \qquad \xi_{max} = \frac{1}{2\pi} 2\alpha\, 2R = \frac{2\alpha R}{\pi}$$

La taille du pixel de numérisation correspondant à la fréquence de Nyquist sera donc telle que :

$$(33) \qquad d = \frac{1}{2\xi_{max}} = \frac{\pi}{4\alpha R}$$

Les relations (30), (31) et (33) donnent alors :

$$F = \frac{N}{2} = 128$$

D'autre part, la relation liant F et $\beta = \frac{R}{Z_c}$ s'écrit :

$$F = 4\,\frac{2L\Delta n}{\lambda n_o^2}\beta^2$$

Considérons un cristal de calcite tel que :

$n_0 = 1{,}658 \qquad \Delta n = 0{,}172 \qquad L = 20$ mm.

L'ouverture requise sera donc : $\beta = 0{,}1$ rd.

L'angle d'inclinaison du cristal sera :

$$\theta = \frac{\beta}{n_o} = 0.06\,\text{rd}$$

et la distance z de l'objet à la plaquette CCD sera telle que :

$$z_c = \frac{R}{\beta} = 20\ \text{mm}$$

soit :

$$z = z_c + L \frac{n_o - 1}{n_o} = 27 \text{ mm}$$

Le premier diaphragme, en supposant que l'image de l'objet soit à une distance de f du deuxième diaphragme (f étant la focale objet de la deuxième optique) de façon à ce que le grandissement soit de -1 ou 1, aura un diamètre $O_1$ tel que :

$$O_1 = 2R = 4\text{mm}$$

et le deuxième diaphragme, en supposant que la focale objet f de la deuxième optique soit de 50 mm, aura un diamètre $O_2$ tel que :

$$O_2 = 2\beta f = 10\text{mm}.$$

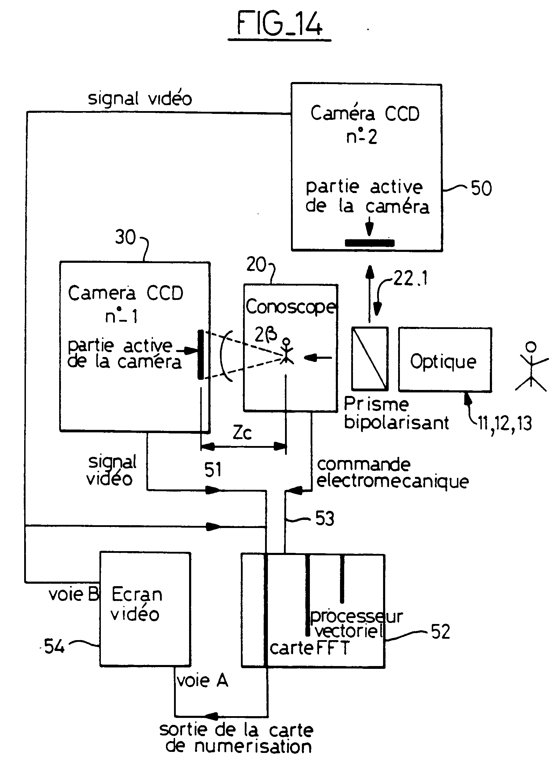

On va maintenant évoqué la structure globale d'un dispositif conoscopique conforme à la présente invention, permettant l'acquisition directe d'hologrammes dans la mémoire d'un micro-ordinateur ainsi que les images bidimensionnelles correspondantes. Son schéma de principe est illustré sur la figure 14.

La scène ou l'objet à holographier sont éclairés par une lampe monochromatique et imagés par le système conoscopique à double optique 11, 12, 13, décrit précédemment d'ouverture $\beta$ .

Après cette optique 11, 12, 13 et à l'aide du prisme bipolariseur 22.1 déjà mentionné, la lumière est décomposée en deux polarisations qui seront aiguillées sur deux caméras différentes 30, 50.

La première image, correspondant à l'une des polarisations, ira se focaliser après passage à travers l'élément conoscopique 20 composé du cristal hors axe 21 et des lames polarisantes 22.2, 23.1, 23.2, à la distance z de la plaquette CCD 30 de la première caméra. Ce premier signal vidéo est transmis par une liaison 51 à une carte de numérisation implantée dans le micro-ordinateur 52 qui le rééchantillonne et le code sur 8 bits.

La deuxième image, correspondant à la deuxième polarisation, ira se focaliser sur la plaquette CCD de la deuxième camera 50 et sera numérisée et stockée de la même manière.

Le micro-ordinateur 52, équipé de cartes de traitement du signal et d'un coprocesseur arithmétique, possèdera en mémoire après ces deux opérations l'information en intensité et en profondeur nécessaires pour effectuer des reconstructions numériques en temps réel (utilisant entre autres des transformées de Fourier).

Comme il a été évoqué précédemment, la rotation de l'axe optique de polarisation de l'une des trois lames restantes peut être effectuée soit mécaniquement, soit électriquement. La solution mécanique a l'avantage de pouvoir bénéficier d'éléments optiques de très haute qualité. La solution électrique est certainement moins lourde à mettre en oeuvre puisque l'on a pas le problème du guidage mécanique en rotation et que les temps de commutation de circulaire droit en circulaire gauche sont plus courts.

Sur la figure 14 la commande de rotation de l'axe de polarisation par le calculateur 52 est opérée par la liaison 53. Le calculateur 52 est relié par ailleurs à un écran vidéo 54.

La présente invention peut donner lieu à de nombreuses applications.

Une première application, simple à mettre en oeuvre, est celle du télémètre. Elle consiste à évaluer la distance d'un objet que l'on a pointé à l'aide d'un faisceau laser de façon à enregistrer l'hologramme d'un point.

Une deuxième application consiste à mesurer des déformations par rapport à une référence donnée préalablement enregistrée et stockée numériquement dans le micro-ordinateur. Ces déformations peuvent être aussi bien millimétriques que micrométriques (tout dépend de l'optique utilisée).

Une troisième application est l'acquisition tridimensionnelle d'objets, avec reconstruction optique ou numérique.

Bien entendu la présente invention n'est pas limitée aux modes de réalisation particuliers qui viennent d'être décrits mais s'étend à toutes variantes conformes à son esprit.

Le limiteur d'angle d'ouverture utilisé selon l'invention, qui permet de limiter l'angle d'ouverture de façon isotrope, c'est-à-dire quelle que soit la position du point de l'objet, ne doit pas être confondue avec un limiteur d'ouverture classique, par exemple un diaphragme de camera placé dans le plan focal image de l'objet et qui génère un cone de lumière variable en fonction du point considéré.

**Revendications**

1. Dispositif holographique pour enregistrer, sur des moyens d'enregistrement, un hologramme d'un objet illuminé, ledit dispositif comprenant

   un système conoscopique (20) inséré sur le trajet des rayons entre l'objet et les moyens d'enregistrement, ledit système comportant un cristal biréfringent (21) inséré entre deux polariseurs (22,23),

   ledit dispositif étant caractérisé par un limiteur d'angle d'ouverture (10,40) inséré sur ledit trajet des rayons, et par le fait que

soit l'axe optique du cristal biréfringent (21) coïncide avec l'axe (O-O) joignant l'objet et les moyens d'enregistrement, et l'axe du limiteur d'angle d'ouverture (10;40) est hors de cet axe;

soit l'axe du limiteur d'angle d'ouverture (10;40) coïncide avec l'axe joignant l'objet et les moyens d'enregistrement et l'axe optique (O-O) du cristal biréfringent (21) est incliné par rapport à cet axe.

2. Dispositif holographique selon la revendication 1, caractérisé par le fait que le limiteur d'angle d'ouverture (10 ; 40) est placé avant le cristal biréfringent (21).

3. Dispositif holographique selon la revendication 1, caractérisé par le fait que le limiteur d'angle d'ouverture (10 ; 40) est placé après le cristal biréfrigent (21).

4. Dispositif selon l'une des revendications 1 à 3, caractérisé par le fait que le limiteur d'angle d'ouverture (10) comprend une lentille (11) et un diaphragme (12) associé.

5. Dispositif selon la revendication 4, caractérisé par le fait que le diaphragme (12) est placé au plan objet de la lentille (11).

6. Dispositif selon l'une des revendications 4 ou 5, caractérisé par le fait que la lentille (11) est centrée sur l'axe optique (O-O) du dispositif et que le diaphragme (12) affleure l'axe de la lentille (11).

7. Dispositif selon l'une des revendications 4 ou 5, caractérisé par le fait que la lentille (11) et le diaphragme (12) sont centrés sur l'axe optique (O-O) du dispositif.

8. Dispositif selon la revendication 7, caractérisé par le fait que les faces principales d'entrée et de sortie (21.a, 21.b) du cristal (21) sont perpendiculaires à l'axe optique (O-O) du dispositif.

9. Dispositif selon la revendication 7, caractérisé par le fait que les faces principales, d'entrée et de sortie (21.a, 21.b), du cristal (21) sont perpendiculaires à l'axe optique (C-C) du cristal.

10. Dispositif selon l'une des revendications 1 à 9, caractérisé par le fait que le démi-angle au sommet du cone d'ouverture donné par le limiteur (10) coïncide avec l'inclinaison (β) du cristal (21) par rapport à l'axe optique du dispositif.

11. Dispositif selon l'une des revendications 1 à 10, caractérisé par le fait qu'il comprend des moyens optiques (13) tels que l'extension spatiale E de l'objet vu à travers le limiteur d'angle d'ouverture réponde à la relation :

$$E < \frac{dR}{f} - O(\frac{d}{f} + 1)$$

dans laquelle :

d        représente la distance à laquelle se trouve l'objet par rapport au diaphragme (12),
R        représente le rayon d'un hologramme élémentaire,
f        représente la focale de la lentille (11),
O        représente le diamètre du diaphragme (12).

12. Dispositif selon la revendication 11, caractérisé par le fait que la distance d séparant l'objet du diaphragme (12) répond à la relation :

$$d > \frac{fO}{R - O}$$

13. Dispositif selon l'une des revendications 11 ou 12, caractérisé par le fait que les moyens optiques (13) comprennent une lentille placée en amont du limiteur d'angle d'ouverture.

14. Dispositif selon l'une des revendications 11 ou 12, caractérisé par le fait qu'il comprend un diaphragme (15) dans le plan de l'objet.

15. Dispositif selon la revendication 4, caractérisé par le fait que le diaphragme (12) a une section circulaire.

16. Dispositif selon la revendication 4, caractérisé par le fait que le diaphragme (12) a une section carrée.

17. Dispositif selon l'une des revendications 4, 15 ou 16, caractérisé par le fait que le diaphragme (12) présente une transmittance variable en fonction de la fréquence considérée.

18. Dispositif selon l'une des revendications 1 à 17, caractérisé par le fait que le limiteur d'ouverture comprend un filtre interférentiel.

19. Dispositif selon la revendication 18, caractérisé par le fait que la longueur d'onde λ1 à laquelle il faut attaquer le filtre interférentiel pour éliminer un angle αo donné est déterminé par les relations suivantes :

$$\frac{\Delta\lambda}{2} + \lambda_{\alpha_0} = \lambda_1$$

$$\lambda_0 - \frac{\Delta\lambda}{2} < \lambda_1 < \lambda_0 + \frac{\Delta\lambda}{2}$$

dans lesquelles :
$\Delta\lambda$ représente la bande passante du filtre centré sur la longueur d'onde λo,
$\lambda_{\alpha o}$ représente la longueur d'onde de résonance du filtre pour l'angle αo, sachant que

$$\lambda_\alpha = \lambda_0 \sqrt{1 - \frac{\sin^2\alpha}{N^{*2}}}$$

et
N est l'indice effectif de réfraction du filtre.

20. Dispositif selon l'une des revendications 1 à 17, caractérisé par le fait que le limiteur d'angle d'ouverture comprend un système à double prisme (40).

21. Dispositif selon la revendication 20, caractérisé par le fait que le système à double prisme est formé d'un cube de verre (40) divisé en deux parties identiques (41, 42) séparées par une couche d'air.

22. Dispositif selon l'une des revendications 20 ou 21, caractérisé par le fait que chacun des prismes (41, 42) possède une face d'entrée (44) ou de sortie (45) orthogonale au plan défini par un rayon (L) et l'axe optique (O-O) du système, et une face de travail (46, 47) orthogonale à ce plan mais inclinée d'un angle γ par rapport à ladite face d'entrée ou de sortie (44, 45).

23. Dispositif selon la revendication 22, caractérisé par le fait que l'inclinaison (γ) de la face de travail (46, 47) par rapport à la face d'entrée ou de sortie est définie par la relation :

$$\gamma = \text{Arcsin}\frac{1}{n} - \frac{i1}{n}$$

dans laquelle
n représente l'indice des prismes, et
i1 représente l'inclinaison du rayon incident (L) par rapport à l'axe optique (O-O) du dispositif.

24. Dispositif selon l'une des revendications 20 à 23, caractérisé par le fait que l'angle maximal éliminé (i1) coïncide avec l'inclinaison de l'axe (C-C) du cristal (21) par rapport à l'axe optique (O-O) du dispositif.

25. Dispositif selon l'une des revendications 20 à 24, caractérisé par le fait qu'il comprend plusieurs systèmes à double prisme (40) répartis autour de l'axe optique (O-O) du dispositif.

26. Dispositif selon l'une des revendications 1 à 17, caractérisé par le fait que le limiteur d'angle d'ouverture comprend une galette de fibres.

27. Dispositif selon l'une des revendications 1 à 26, caractérisé par le fait que chacun des polariseurs circulaires (22, 23) placés respectivement de part et d'autre du cristal (21) comprend un polariseur linéaire (22.1 ; 23.1) et une lame quart d'onde (22.2 ; 23.2) ou une valve optique équivalente.

28. Dispositif selon la revendication 27, caractérisé par le fait qu'il comprend des moyens propres à agir sur les polariseurs pour enregistrer successivement deux hologrammes correspondant respectivement au cas où les polariseurs d'entrée et de sortie (22, 23) sont circulaires de même sens et au cas où les polariseurs d'entrée et de sortie (22, 23) sont circulaires de sens opposés, et des moyens propres à soustraire les deux hologrammes ainsi obtenus pour éliminer le fond continu.

29. Dispositif selon l'une des revendications 1 à 28, caractérisé par le fait que le polariseur d'entrée comprend un prisme bi-polarisant (22.1) et une lame quart d'onde (22.2) ou une valve optique équivalente, et par le fait qu'un second support d'enregistrement (50) est placé en regard du prisme bi-polarisant (22.1) pour enregistrer l'image bidimensionnelle de l'objet.

**Patentansprüche**

1. Holographische Vorrichtung, um auf einer Aufzeichnungseinrichtung ein Hologramm eines beleuchteten Gegenstandes aufzuzeichnen, wobei die Vorrichtung umfaßt
ein konoskopisches System (20), das in den Strahlengang zwischen den Gegenstand und die Aufzeichnungseinrichtung eingefügt ist, wobei das genannte System einen doppelbrechenden Kristall (21) umfaßt, der zwischen zwei Polarisatoren (22, 23) eingeführt ist,
wobei die genannte Vorrichtung gekennzeichnet ist, durch eine Begrenzungseinrichtung des Öffnungswinkels (10, 40), die in den genannten Strahlenweg eingeschaltet ist, und dadurch, daß
entweder die optische Achse des doppelbrechenden Kristalls (21) mit der Achse (O-O) zusammenfällt, die den Gegenstand und die Aufzeichnungseinrichtung verbindet, und die Achse der Begrenzungseinrichtung des Öffnungswinkels (10; 40) außerhalb dieser Achse ist;
oder die Achse der Begrenzungseinrichtung des Öffnungswinkels (10; 40) mit der Achse zusammenfällt, die den Gegenstand und die Aufzeichnungseinrichtung verbindet, und die optische Achse (O-O) des doppelbrechenden Kristalls (21) in bezug auf diese Achse geneigt ist.

2. Holographische Vorrichtung gemäß Anspruch 1, dadurch gekennzeichnet, daß die Begrenzungseinrichtung des Öffnungswinkels (10; 40) vor dem doppelbrechenden Kristall (21) angeordnet ist.

3. Holographische Vorrichtung gemäß Anspruch 1, dadurch gekennzeichnet, daß die Begrenzungseinrichtung des Öffnungswinkels (10; 40) hinter dem doppelbrechenden Kristall (21) angeordnet ist.

4. Vorrichtung gemäß einem der Ansprüche 1 bis 3, dadurch gekennzeichnet, daß die Begrenzungseinrichtung des Öffnungswinkels (10) eine Linse (11) und eine zugeordnete Blende (12) umfaßt.

5. Vorrichtung gemäß Anspruch 4, dadurch gekennzeichnet, daß die Blende (12) in der Gegenstandsebene der Linse (11) angeordnet ist.

6. Vorrichtung gemäß einem der Ansprüche 4 oder 5, dadurch gekennzeichnet, daß die Linse auf der optischen Achse (O-O) der Vorrichtung zentriert ist und daß die Blende (12) die Achse der Linse (11) berührt.

7. Vorrichtung gemäß einem der Ansprüche 4 oder 5, dadurch gekennzeichnet, daß die Linse (11) und die Blende (12) auf der optischen Achse (O-O) der Vorrichtung zentriert sind.

8. Vorrichtung gemäß Anspruch 7, dadurch gekennzeichnet, daß die Eintritts- und Austritts-Hauptseite (21.a, 21.b) des Kristalls (21) senkrecht zu der optischen Achse (O-O) der Vorrichtung sind.

9. Vorrichtung gemäß Anspruch 7, dadurch gekennzeichnet, daß die Eintritts- und Austritts-Hauptseite (21.a, 21.b) des Kristalls (21) senkrecht zu der optischen Achse (C-C) des Kristalls sind.

10. Vorrichtung gemäß einem der Ansprüche 1 bis 9, dadurch gekennzeichnet, daß der halbe Winkel des Scheitels des Öffnungskegels, der durch die Begrenzungseinrichtung (10) gegeben ist, mit der Neigung (β) des Kristalls (21) in bezug auf die optische Achse der Vorrichtung zusammenfällt.

11. Vorrichtung gemäß einem der Ansprüche 1 bis 10, dadurch gekennzeichnet, daß sie optische Einrichtungen (13) umfaßt derart, daß die räumliche Ausdehnung E des Gegenstandes durch die Begrenzungseinrichtung des Öffnungswinkels hindurch betrachtet die Beziehung erfüllt:

$$E < \frac{dR}{f} - O\left(\frac{d}{f} + 1\right)$$

worin:
d den Abstand darstellt, in dem sich der Gegenstand in bezug auf die Blende (12) befindet,
R den Radius eines elementaren Hologramms darstellt,
f die Brennweite der Linse (11) darstellt,
O den Durchmesser der Blende (12) darstellt.

12. Vorrichtung gemäß Anspruch 11, dadurch gekennzeichnet, daß die Strecke d, die den Gegenstand von der Blende (12) trennt, die Beziehung erfüllt:

$$d > \frac{fO}{R - O}$$

13. Vorrichtung gemäß einem der Ansprüche 11 oder 12, dadurch gekennzeichnet, daß die optischen Einrichtungen (13) eine Linse umfassen, die stromaufwärts der Begrenzungseinrichtung des Öffnungswinkels angeordnet ist.

14. Vorrichtung gemäß einem der Ansprüche 11 oder 12, dadurch gekennzeichnet, daß sie eine Blende (15) in der Gegestandsebene umfaßt.

15. Vorrichtung gemäß Anspruch 4, dadurch gekennzeichnet, daß die Blende (12) einen kreisförmigen Querschnitt hat.

16. Vorrichtung gemäß Anspruch 4, dadurch gekennzeichnet, daß die Blende (12) einen quadratischen Querschnitt hat.

17. Vorrichtung gemäß einem der Ansprüche 4, 15 oder 16, dadurch gekennzeichnet, daß die Blende (12) einen Durchlässigkeitsgrad aufweist, der als Funktion der betrachteten Frequenz veränderbar ist.

18. Vorrichtung gemäß einem der Ansprüche 1 bis 17, dadurch gekennzeichnet, daß die Begrenzungseinrichtung der Öffnung ein Interferenzfilter umfaßt.

19. Vorrichtung gemäß Anspruch 18, dadurch gekennzeichnet, daß die Wellenlänge $\lambda_1$, bei der das Interferenzfilter angegangen werden muß, um einen gegebenen Winkel $\alpha_0$ auszuschließen, durch die folgenden Beziehungen bestimmt ist:

$$\frac{\Delta\lambda}{2} + \lambda_{\alpha_0} = \lambda_1$$

$$\lambda_0 - \frac{\Delta\lambda}{2} < \lambda_1 < \lambda_0 + \frac{\Delta\lambda}{2}$$

worin :
$\Delta\lambda$ das Durchlaßband des auf die Wellenlänge $\lambda_0$ zentrierten Filters darstellt,
$\lambda_{\alpha_0}$ die Resonanzwellenlänge des Filters für den Winkel $\alpha 0$ darstellt, wobei

$$\lambda_\alpha = \lambda_0 \sqrt{1 - \frac{\sin^2\alpha}{N^{*2}}}$$

und N der effektive Brechungsindex des Filters ist.

20. Vorrichtung gemäß einem der Ansprüche 1 bis 17, dadurch gekennzeichnet, daß die Begrenzungseinrichtung des Öffnungswinkels ein System mit einem doppelten Prisma (40) umfaßt.

21. Vorrichtung gemäß Anspruch 20, dadurch gekennzeichnet, daß das System mit einem doppelten Prisma aus einem Würfel aus Glas (40) gebildet ist, der in zwei identische Teile (41, 42) unterteilt ist, die durch eine Luftschicht getrennt sind.

22. Vorrichtung gemäß einem der Ansprüche 20 oder 21, dadurch gekennzeichnet, daß jedes der Prismen (41, 42) eine Eintrittsseite (44) oder Austrittsseite (45) aufweist, die zu der Ebene orthogonal ist, die durch einen Strahl (L) und die optische Achse (O-O) des Systems definiert ist, und eine Arbeitsseite (46, 47), die zu dieser Ebene orthogonal aber unter einem Winkel $\gamma$ in bezug auf die genannte Eintrittsseite oder Austrittsseite (44, 45) geneigt ist.

23. Vorrichtung gemäß Anspruch 22, dadurch gekennzeichnet, daß die Neigung ($\gamma$) der Arbeitsseite (46, 47) in bezug auf die Eintrittsseite oder die Austrittsseite durch die Beziehung festgelegt ist:

$$\gamma = \arcsin\frac{1}{n} - \frac{i1}{n}$$

worin
n den Brechungsindex der Prismen darstellt, und
i1 die Neigung des einfallenden Strahls (L) im bezug auf die optische Achse (O-O) der Vorrichtung darstellt.

24. Vorrichtung gemäß einem der Ansprüche 20 bis 23, dadurch gekennzeichnet, daß der maximale, ausgeschlossene Winkel (i1) mit der Neigung der Achse (C-C) des Kristalls (21) in bezug auf die optische Achse (O-O) der Vorrichtung zusammenfällt.

25. Vorrichtung gemäß einem der Ansprüche 20 bis 24, dadurch gekennzeichnet, daß sie mehrere Systeme mit doppeltem Prisma (40) umfaßt, die um die optische Achse (O-O) der Vorrichtung herum aufgeteilt sind.

26. Vorrichtung gemäß einem der Ansprüche 1 bis 17, dadurch gekennzeichnet, daß die Begrenzungseinrichtung des Öffnungswinkels eine Galette aus Fasern umfaßt.

27. Vorrichtung gemäß einem der Ansprüche 1 bis 26, dadurch gekennzeichnet, daß jeder der Zirkularpolarisatoren (22, 23), die jeweils beidseitig des Kristalls (21) angeordnet sind, einen linearen Polarisator (22.1; 23.1) und ein Viertelwellenlängenplättchen (22.2; 23.2) oder ein äquivalentes, optisches Ventil umfaßt.

28. Vorrichtung gemäß Anspruch 27, dadurch gekennzeichnet, daß sie Einrichtungen umfaßt, die geeignet sind, auf die Polarisatoren zu wirken, um aufeinanderfolgend zwei Hologramme aufzuzeichnen, die dem Fall, wo der Eintritts- und der Austrittspolarisator (22, 23) zirkular mit demselben Sinn sind bzw. dem Fall entsprechen, wo der Eintritts- und der Austrittspolarisator (22, 23) zirkular mit entgegengesetztem Sinn sind, sowie Einrichtungen, die geeignet sind, die derart erhaltenen zwei Hologramme zu subtrahieren, um den kontinuierlichen Hintergrund zu entfernen.

29. Vorrichtung gemäß einem der Ansprüche 1 bis 28, dadurch gekennzeichnet, daß der Eintrittspolarisator ein bipolarisierendes Prisma (22.1) und eine Viertelwellenlängenplättchen (22.2) oder ein äquivalentes, optisches Ventil umfaßt, und daß ein zweites Aufzeichnungsmedium (50) dem bipolarisierenden Prisma (22.1) gegenüber angeordnet ist, um das zweidimensionale Bild des Gegenstandes aufzuzeichnen.

## Claims

1. A holographic apparatus for registering, on registering means, the hologram of an illuminated object, said apparatus comprising a conoscopic system (20) inserted on the path of optical rays between the object and the registering means, said system comprising a birefringent crystal (21) inserted between two polarizers (22, 23), said apparatus being characterized by an aperture angle limiter (10, 40) inserted on said path of the rays, and characterized in that either the optical axis of the birefringent crystal (21) concurrs with the axis (O-O) from the object to the registering means, and the axis of the aperture angle limiter (10;40) is off this axis, or the axis of the aperture angle limiter (10;40) concurrs with the axis from the object to the registering means and the optical axis (O-O) of the birefringent crystal (21) is inclined relative to this axis.

2. A holographic apparatus according to claim 1, characterized by the fact that the aperture angle limiter (10; 40) is placed in front of the birefringent crystal (21).

3. A holographic apparatus according to claim 1, characterized by the fact that the aperture angle limiter (10; 40) is placed behind the birefringent crystal (21).

4. Apparatus according to any one of claims 1 to 3, characterized by the fact that the aperture angle limiter (10) comprises a lens (11) associated with a diaphragm (12).

5. Apparatus according to claim 4, characterized by the fact that the diaphragm (12) is placed in the object plane of the lens (11).

6. Apparatus according to claim 4 or 5 , in combination with claim 4, characterized by the fact that the lens (11) is centered on the optical axis (O-O) of the apparatus and that the diaphragm (12) is flush with the axis of the lens (11).

7. Apparatus according to claim 4 or 5 in combination with claim 5, characterized by the fact that the lens (11) and the diaphragm (12) are centered on the optical axis (O-O) of the apparatus.

8. Apparatus according to claim 7, characterized by the fact that the main inlet and outlet faces (21.a, 21.b) of the crystal (21) are perpendicular to the optical axis (O-O) of the apparatus.

9. Apparatus according to claim 7, characterized by the fact that the main inlet and outlet faces (21.a, 21.b) of the crystal (21) are perpendicular to the optical axis (C-C) of the crystal.

10. Apparatus according to one of claims 1 to 9, characterized by the fact that the half angle at the apex of the aperture cone given by the limiter (10) coincides with the inclination ($\beta$) of the crystal (21) relative to the optical axis of the apparatus.

11. Apparatus according to any one of claims 1 to 10, characterized by the fact that it includes optical means (13) such that the three dimensional extent E of the object seen through the aperture angle limiter satisfies the relationship:

$$E < [dR/f] - O[1 + d/f]$$

in which:
$\underline{d}$ represents the distance of the object from the diaphragm (12);
R represents the radius of an elementary hologram:
$\underline{f}$ represents the focal length of the lens (11); and
O represents the diameter of the diaphragm (12).

12. Apparatus according to claim 11, characterized by the fact that the distance $\underline{d}$ of the object from the diaphragm (12) satisfies the relationship:

$$d > fO/[R - O].$$

13. Apparatus according to claim 11 or 12, characterized by the fact that the optical means (13) include a lens placed upstream from the aperture angle limiter.

14. Apparatus according to claim 11 or 12, characterized by the fact that it includes a diaphragm (15) in the object plane.

15. Apparatus according to claim 4, characterized by the fact that the diaphragm (12) is circular in section.

16. Apparatus according to claim 4, characterized by the fact that the diaphragm (12) is square in section.

17. Apparatus according to any one of claims 4, 15 and 16, characterized by the fact that the transmittance of the diaphragm (12) is variable as a function of the frequency under consideration.

18. Apparatus according to one of claims 1 to 17, characterized by the fact that the aperture limiter includes an interference filter.

19. Apparatus according to claim 18, characterized by the fact that the wavelength $\lambda_1$ at which the interference filter should be approached in order to eliminate a given angle $\alpha_o$ is given by the following equations:

$$\tfrac{1}{2}\delta\lambda + \lambda_{ao} = \lambda_1$$
$$\lambda_o - \tfrac{1}{2}\delta\lambda < \lambda_1 < \lambda_0 + \tfrac{1}{2}\delta\lambda$$

in which:
$\delta\lambda$ represents the passband of the filter centered on the wavelength $\lambda_0$
$\lambda\alpha_0$ represents the resonance wavelength of the filter for the angle $\alpha_o$ given that

$$\lambda_\alpha = \lambda_0\sqrt{1 - [\sin^2\alpha]/N^{*2}}$$

and
N is the effective refractive index of the filter.

20. Apparatus according to one of claims 1 to 17, characterized by the fact that the aperture angle limiter comprises a two-prism system (40).

21. Apparatus according to claim 20, characterized by the fact that the two-prism system is constituted by a glass cube (40) split into two identical portions (41, 42) separated by a layer of air.

22. Apparatus according to claim 20 or 21, characterized by the fact that each of the prisms (41, 42) has an inlet face (44) or an outlet face (45) orthogonal to the plane defined by a ray (L) and the optical axis (O-O) of the system, and a working face (46, 47) orthogonal to said plane but inclined at an angle $\gamma$ relative to said inlet or outlet face (44, 45).

23. Apparatus according to claim 22, characterized by the fact that the inclination $\gamma$ of the working face (46,

16

47) relative to the inlet face or the outlet face is defined by the equation:

$$\gamma = \text{Arcsin} \, [1/n] - i_1/n$$

in which

$\underline{n}$ represents the index of the prisms; and

$i_1$ represents the inclination of the incident ray (L) relative to the optical axis (O-O) of the apparatus.

24. Apparatus according to any one of claims 20 to 23, characterized by the fact that the maximum angle to be eliminated ($i_1$) coincides with the angle of inclination of the crystal axis (C-C) relative to the optical axis (O-O) of the apparatus.

25. Apparatus according to any one of claims 20 to 24, characterized by the fact that it comprises a plurality of two-prism systems (40) distributed around the optical axis (O-O) of the apparatus.

26. Apparatus according to one of claims 1 to 17, characterized by the fact that aperture angle limiter comprises a slab of fibers.

27. Apparatus according to any one of claims 1 to 26, characterized by the fact that each of the circular polarizers (22, 23) respectively placed on opposite sides of the crystal (21) comrpises a linear polarizer (22.1; 23.1) together with a quarterwave plate (22.2; 23.2) or an equivalent optical valve.

28. Apparatus according to claim 27, characterized by the fact that it includes means suitable for acting on the polarizer to record two holograms in succession corresponding respectively to the case where both the inlet and the outlet polarizers (22, 23) are circular and in the same direction and to the case where both the inlet and outlet polarizers (22, 23) are circular but in opposite directions, and means suitable for taking the difference between the two holograms obtained in this way in order to eliminate the bias.

29. Apparatus according to any one of claims 1 to 28, characterized by the fact that the inlet polarizer comprises a bipolarizing prism (22.1) and a quarterwave plate (22.2) or equivalent optical valve, and by the fact that a second recording medium (50) is placed facing the bipolarizing prism (22.1) to record a two-dimensional image of the object.

## FIG.1
## Etat de la technique

objet

polariseur circulaire

cristal uniaxe

axe optique

polariseur circulaire

plan d'enregistrement

CONOSCOPE

## FIG.2

### HOLOGRAMME D'UN POINT

## FIG_3

## Etat de la technique

| $\alpha_1$ | $\alpha_2$ | T |
|---|---|---|
| $+\dfrac{\pi}{4}$ | $+\dfrac{\pi}{4}$ | $1 + \cos.\alpha r^2$ |
| $-\dfrac{\pi}{4}$ | $-\dfrac{\pi}{4}$ | |
| $+\dfrac{\pi}{4}$ | $-\dfrac{\pi}{4}$ | $1 - \cos.\alpha r^2$ |
| $-\dfrac{\pi}{4}$ | $+\dfrac{\pi}{4}$ | |
| $0$ | $+\dfrac{\pi}{4}$ | $1 - \sin 2(\psi - \phi_0)\sin.\alpha r^2$ |
| $0$ | $-\dfrac{\pi}{4}$ | $1 + \sin 2(\psi - \phi_0)\sin.\alpha r^2$ |

## FIG_4

19

## FIG_5

```
Objet    →    [10]              [20]              [30]
              Optique           Cristal           Caméra
              avec              avec              CCD
              limiteur          polarisateurs     avec
              d'ouverture                         micro-ordinateur
```

Position interchangeable

## FIG_6a

FIG.6b

FIG.6c

FIG_7

# FIG_8

# FIG_9

# FIG_10

Objet
P

Optique 1

Image1

Diaphragme

Optique 2

12

11

Image 2

β

P

14

13

focale objet
de l' optique 2

15

EP 0 394 137 B1

## FIG_11

## FIG_12

20

vers caméra
CCD n°2

Lame quart d'onde
(ou valve optique)

21
) Cristal

lame quart d onde
(ou valve optique)

polariseur
lineaire

polarisation linéaire
n°2

polarisation
lineaire n°1

vers la
camera
CCD n°1

22.1

22.2

23.1

23.2

prisme bipolarisant

non
interchangeables

sens de la lumière

FIG_13

EP 0 394 137 B1

27

# FIG_14

signal vidéo

Caméra CCD
n°2

partie active
de la caméra

50

30

Camera CCD
n°1

partie active
de la caméra

20

Conoscope

2β

22.1

Prisme
bipolarisant

Optique

11,12,13

Zc

signal
vidéo

51

commande
electromecanique

53

voie B

Ecran
vidéo

54

processeur
vectoriel

carte FFT

52

voie A

sortie de la carte
de numerisation